## Europäisches Patentamt

## European Patent Office

## Office européen des brevets

(19)

(11) Veröffentlichungsnummer: **0 125 596**

**A1**

(12) # EUROPÄISCHE PATENTANMELDUNG

(21) Anmeldenummer: **84105113.9**

(22) Anmeldetag: **07.05.84**

(51) Int. Cl.³: **H 02 G 1/16**

(30) Priorität: **13.05.83 DE 8314164 U**

(43) Veröffentlichungstag der Anmeldung:
**21.11.84 Patentblatt 84/47**

(84) Benannte Vertragsstaaten:
**BE DE FR GB IT NL SE**

(71) Anmelder: **Högner, Hans**
**Kurze Strasse 1**
**D-4130 Moers 1(DE)**

(72) Erfinder: **Högner, Hans**
**Kurze Strasse 1**
**D-4130 Moers 1(DE)**

(74) Vertreter: **Funken, Josef, Dipl.-Ing.**
**Am Lerchenfeld 14**
**D-4133 Neukirchen-Vluyn(DE)**

(54) Isolierstreifen.

(57) Bei einem Isolierstreifen (1) aus elektrisch isolierendem Material mit einer Haftschicht an der Innenfläche (4) zum Isolieren von entisolierten Stellen an Litzen (9, 10, 11, 12), Kabeln (8) u. dgl. durch Umwickeln der zu isolierenden Stelle mit dem Isolierstreifen (1) entsprechen die Länge (1) und die Stärke (b) des Isolierstreifens (1) dem einfachen Umfang beziehungsweise der Stärke der Isolierschicht der Litze (9, 10, 11, 12) beziehungsweise des Kabels (8). Die Stirnflächen (2, 3) am Anfang und Ende des Isolierstreifens (1) sind schräg angeschnitten und die Innenfläche (4) des Isolierstreifens (1) sowie die am stumpfen Winkel ($\alpha$) angrenzende Stirnfläche (3) mit einem Kleber (5) überzogen, auf dem sich eine Schutzfolie (6) befindet.

FIG. 2

EP 0 125 596 A1

Croydon Printing Company Ltd.

- 1 -

Anwaltsakte 583 EU
4. Mai 1984

Hans Högner
Kurze Str. 1
413 Moers 1

"Isolierstreifen"

Die Erfindung betrifft einen Isolierstreifen aus elektrisch isolierendem Material mit einer Haftschicht an der Innenfläche zum Isolieren von entisolierten Stellen an Litzen, Kabeln u. dgl. durch Umwickeln der zu isolierenden Stelle mit dem Isolierstreifen.

Es ist bekannt, bei elektrischen Leitern, insbesondere bei Litzen, Kabeln u. dgl. blanke und schadhafte Stellen dadurch gegen die Umgebung zu isolieren, daß ein Isolierband in mehreren Windungen um diese Stelle gewickelt wird. Das ist insbesondere an wenig zugänglichen Stellen schwierig und umständlich. Desweiteren ist es bekannt, zwei Drähte oder Litzen miteinander zu verknoten und anschließend die blanke Verbindungsstelle mit Isolierband in mehreren Windungen zu umwickeln.

Der Erfindung liegt die Aufgabe zugrunde, einen Isolierstreifen der einleitend genannten Art zu schaffen, mit dem es möglich ist, entisolierte Stellen an Kabeln und Litzen, insbesondere an wenig zugänglichen Stellen einfach und schnell zu isolieren. Desweiteren sollen zwei miteinander verknotete Drähte oder Litzen ebenfalls ohne weiteres miteinander verbunden werden können.

Diese Aufgabe wird erfindungsgemäß dadurch gelöst, daß die Länge und die Stärke des Isolierstreifens dem einfachen Umfang beziehungsweise der Stärke der Isolierschicht der Litze beziehungsweise des Kabels entsprechen, die Stirnflächen am Anfang und Ende des Isolierstreifens schräg angeschnitten sind und die Innenfläche des Isolierstreifens sowie die am stumpfen Winkel angrenzende Stirnfläche mit einem Kleber überzogen sind, auf dem sich eine Schutzfolie befindet.

Dadurch ist es nicht mehr notwendig, blanke und schadhafte Stellen an Litzen und Kabeln mit einem Isolierband in mehreren Lagen zu umwickeln, vielmehr läßt sich gemäß der Erfindung eine derartige Schadstelle ohne weiteres dadurch isolieren, daß der in Länge und Stärke der zu isolierenden Stelle angepaßte Isolierstreifen in nur einer Windung um diese Stelle herumgelegt und hier mit den benachbarten Bereichen der Litze beziehungsweise des Kabels fest verklebt wird. Hinzu kommt, daß die Stirnflächen am Anfang und Ende des Isolierstreifens derart schräg angeschnitten sind, daß diese Stirnflächen gegeneinander passen, wenn der Isolierstreifen in einer Windung um die zu isolierende Stelle gelegt ist.

Die beiden Stirnflächen am Anfang und Ende des Isolierstreifens verlaufen zweckmäßig parallel zueinander. Das ist insbesondere in solchen Fällen zweckmäßig, in denen die Elastizität des Isolierstreifens hoch und gleichzeitig die Stärke des Isolierstreifens im Vergleich zum Durchmesser des zu isolierenden Kabels klein ist.

In Fällen, in denen diese Voraussetzungen nicht gegeben sind, wenn also der Isolierstreifen aus weniger elastischem Material besteht und die Stärke des Isolierstreifens im Vergleich mit dem Durchmesser des zu isolierenden Kabels nicht klein ist, verlaufen zweckmäßig die Stirnflächen am Anfang und Ende des Isolierstreifens so, daß ihre gedachten Verlängerungen einen spitzen Winkel einschließen.

Der Isolierstreifen besteht vorteilhafterweise aus Gummi. Damit ist eine hohe Elastizität des Isolierstreifens gegeben, so daß etwaige Unebenheiten und Ungleichmäßigkeiten des zu isolierenden Kabels nicht weiter störend in Erscheinung treten.

Dadurch, daß die Stirnflächen abgeschrägt sind, bieten sie vergleichsweise große Verbindungsflächen für den Kleber. Hinzu kommt, daß man sich etwaigen Unebenheiten und Toleranzen im Kabel anpassen kann. Man gelangt demzufolge hierdurch zu einer um das Kabel herumgelegten Manschette, mit der nicht nur eine schadhafte Stelle zu isolieren ist, die vielmehr auch die isolierte Stelle mechanisch fest zusammenhält.

Die Breite des Isolierstreifens kann für die wesentlichen Anwendungszwecke etwa gleich gehalten werden, während die Länge des Isolierstreifens dem Umfang des zu isolierenden Kabels angepaßt werden muß. Das heißt, daß es für unterschiedliche Kabeldurchmesser entsprechend unterschiedliche Paßformen geben muß.

Die Erfindung wird nachfolgend anhand eines in der Zeichnung dargestellten Ausführungsbeispiels des näheren erläutert. Es zeigt:

Figur 1 einen Isolierstreifen in perspektivischer Darstellung und

Figur 2 den in Figur 1 dargestellten Isolierstreifen teilweise um eine zu isolierende Stelle eines Kabels herumgewickelt.

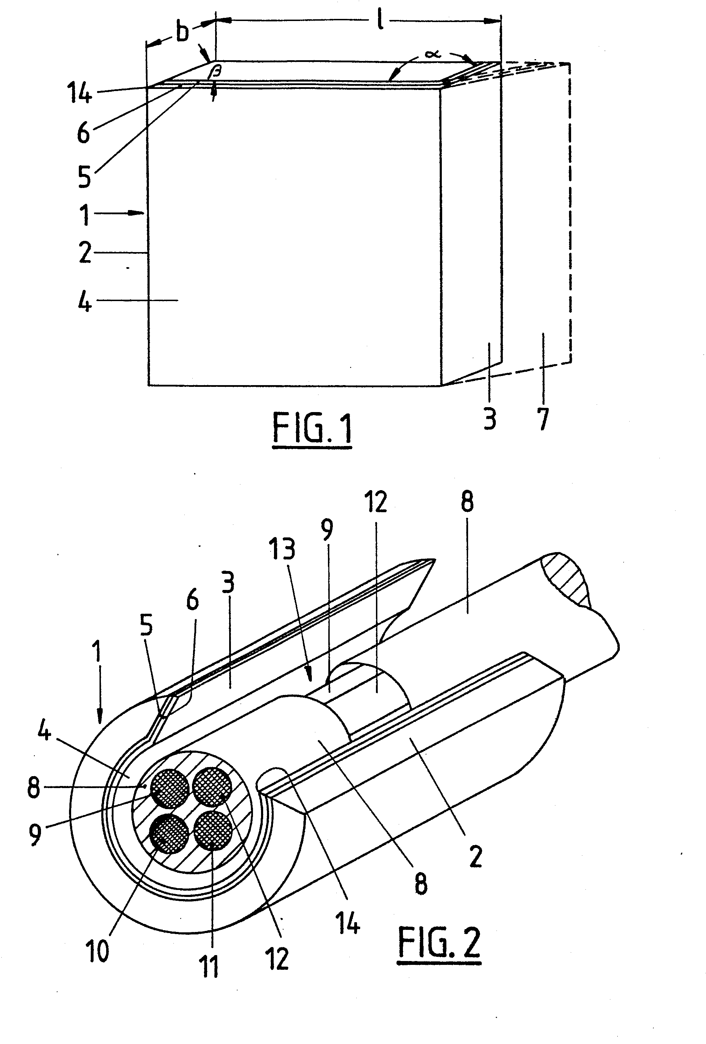

Der in Figur 1 (nicht maßstäblich) dargestellte Isolierstreifen 1 besteht aus elektrisch isolierendem Material. Seine
Länge 1 entspricht dem Umfang des zu isolierenden Kabels,
während seine Breite b in etwa der Stärke der Isolationsschicht des Kabels angepaßt ist. Die Stirnflächen 2 und 3
am Anfang und Ende des Isolierstreifens 1 sind schräg angeschnitten. Auf der Innenfläche 4 und der am stumpfen Winkel
$\alpha$ angrenzenden Stirnfläche 3 ist ein Kleber 5 vorgesehen,
auf dem sich eine Schutzfolie 6 befindet.

Bei genügend hoher Elastizität des Isolierstreifens 1 können
die Stirnflächen 2 und 3 parallel zueinander verlaufen,
wie es in Figur 1 in ausgezogenen Linien dargestellt ist.
In anderen Fällen empfiehlt es sich, die sich an der Innenseite 4 anschließende Stirnfläche wie in Figur 1 gestrichelt dargestellt anzuordnen. Dadurch wird auch der
Differenz zwischen dem Innendurchmesser und dem Außendurchmesser des Isolierstreifens 1 Rechnung getragen, wenn
er um ein Kabel gewickelt ist. Bei der in Figur 1 gestrichelt dargestellten Ausführung verlaufen die Stirnflächen 2 und 7 am Anfang und Ende des Isolierstreifens 1
so, daß ihre gedachten Verlängerungen einen spitzen Winkel einschließen.

In Figur 2 ist der Zustand dargestellt, in dem der Isolierstreifen 1 um ein Kabel 8 mit den Litzen 9,10,11 und 12
teilweise herumgewickelt ist.

Beim Isolieren einer schadhaften Stelle 13 eines Kabels 8
geht man so vor, daß man zunächst die Schutzfolie 6 entfernt und anschließend die dem spitzen Winkel $\beta$ gegenüber befindliche Kante 14 gegen das Kabel 8 anlegt und
von hier aus den Isolierstreifen 1 um das Kabel 8 herum
gegen dieses so andrückt, daß die beiden Stirnflächen 2
und 3 fest gegeneinander zur Anlage kommen und mittels
des Klebers 5 untrennbar miteinander verbunden werden.
Gleichzeitig wird das Kabel 8 auch mit der gesamten Innenfläche 4 des Isolierstreifens 1 durch den Kleber fest verbunden.

- 1 -

Anwaltsakte 583 EU

4. Mai 1984

Hans Högner

Kurze Str. 1

413 Moers 1

"Isolierstreifen"

## P a t e n t a n s p r ü c h e

1. Isolierstreifen aus elektrisch isolierendem Material mit einer Haftschicht an der Innenfläche zum Isolieren von entisolierten Stellen an Litzen, Kabeln u. dgl. durch Umwickeln der zu isolierenden Stelle mit dem Isolierstreifen,

   **dadurch gekennzeichnet,**

   daß die Länge (1) und die Stärke (b) des Isolierstreifens (1) dem einfachen Umfang beziehungsweise der Stärke der Isolierschicht der Litze (9,10,11,12) beziehungsweise des Kabels (8) entsprechen, die Stirnflächen (2,3) am Anfang und Ende des Isolierstreifens (1) schräg angeschnitten sind und die Innenfläche (4) des Isolierstreifens (1) sowie die am stumpfen Winkel ($\alpha$) angrenzende Stirnfläche (3) mit einem Kleber (5) überzogen sind, auf dem sich eine Schutzfolie (6) befindet.

2. Isolierstreifen nach Anspruch 1,

   dadurch gekennzeichnet,

   daß die beiden Stirnflächen (2,3) am Anfang und Ende des
   Isolierstreifens (1) parallel zueinander verlaufen.

3. Isolierstreifen nach Anspruch 1,

   dadurch gekennzeichnet,

   daß die Stirnflächen (2,3) am Anfang und Ende des Isolierstreifens (1) so verlaufen, daß ihre gedachten
   Verlängerungen einen spitzen Winkel einschließen.

4. Isolierstreifen nach einem oder mehreren der Ansprüche
   1 bis 3,

   dadurch gekennzeichnet,

   daß als Isoliermaterial Gummi dient.

1/1                                    0125596

FIG. 1

FIG. 2

## EUROPÄISCHER RECHERCHENBERICHT

| | EINSCHLÄGIGE DOKUMENTE | | EP 84105113.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE - A1 - 2 937 749 (SIEMENS) <br> * Fig. 2; Patentanspruch 1 * <br> -- | 1-4 | H 02 G 1/16 |
| A | DE - A1 - 3 115 330 (THOMAS & BETTS) <br> * Fig. 1-4; Seite 11 * <br> -- | 1-4 | |
| A | DE - A1 - 1 950 021 (SUMITOMO) <br> -- | 1 | |
| A | US - A - 4 278 836 (BINGHAM) <br> * Fig. 5-8 * <br> ---- | | |

| RECHERCHIERTE SACHGEBIETE (Int. Cl. ³) |
|---|
| H 02 G 1/00 |
| H 02 G 15/00 |
| H 01 B 17/00 |
| H 01 B 19/00 |

Der vorliegende Recherchenbericht wurde für alle Patentansprüche erstellt.

| Recherchenort <br> WIEN | Abschlußdatum der Recherche <br> 30-07-1984 | Prüfer <br> SCHMIDT |
|---|---|---|